# EUROPÄISCHE PATENTSCHRIFT

(11) **EP 3 588 028 B1**
(45) Veröffentlichungstag und Bekanntmachung des Hinweises auf die Patenterteilung: **27.11.2024**
(21) Anmeldenummer: 18180460.0
(22) Anmeldetag: 28.06.2018
(51) Int. Cl.: G01K 1/08, G01K 1/14, G01K 7/16, G01F 1/684, G01P 1/02

(54) **ELEKTRISCHER SENSOR**
ELECTRICAL SENSOR
CAPTEUR ÉLECTRIQUE

(43) Veröffentlichungstag der Anmeldung: 01.01.2020
(73) Patentinhaber: PGT THERMPROZESSTECHNIK GMBH, 53842 Troisdorf (DE)
(72) Erfinder: SCHUBERT, Harald, 53859 Niederkassel (DE); PFISTER, Holger, 51688 Wipperfürth (DE); TROMPETTER, Sven, 53721 Siegburg (DE); GROMMES, Günter, 53721 Siegburg (DE)
(74) Vertreter: Maiwald GmbH

(56) Entgegenhaltungen:
- WO-A1-2011/042023
- DE-A1- 102013 200 772
- JP-U- S57 168 030
- US-A1- 2017 284 870

## Beschreibung

Die Erfindung betrifft einen elektrischen Sensor, insbesondere Temperatursensor, mit den Merkmalen des Oberbegriffs des Anspruchs 1. Der elektrische Sensor umfasst ein Trägerelement, das speziell dafür ausgebildet ist, mindestens ein elektrisches oder elektronisches Bauelement aufzunehmen. Hierbei kann es sich um eine aktives oder passives Bauelement handeln, insbesondere um ein Mess- oder Sensorelement. Das elektrische oder elektronische Bauelement kann Anschlussdrähte oder Kontaktflächen zur Verbindung mit den Anschlussdrähten einer elektrischen Anschlussleitung aufweisen.

In der Ausführung als Temperatursensor soll der elektrische Sensor derart in ein Rohr- oder Leitungssystem integrierbar sein, dass er das Messen der Temperatur eines durch das Rohr- oder Leitungssystem strömenden Mediums erlaubt.

Ferner wird eine medienführende Leitung mit einem erfindungsgemäßen elektrischen Sensor vorgeschlagen. Bei der Leitung kann es sich sowohl um ein Rohr, als auch um eine Bohrung handeln, die von einem Medium durchströmt wird.

### Stand der Technik

Aus der Gebrauchsmusterschrift DE 88 02 130 U1 ist ein Temperaturfühler mit einem Gehäuse und einem hierin aufgenommenen temperaturempfindlichen Messelement bekannt, der in der Weise in ein Rohrsystem einbaubar ist, dass ein Ende des Gehäuses, welches das Messelement enthält, in eine das Rohrsystem durchströmende Flüssigkeit eintaucht. Dabei stützt sich der Temperaturfühler über einen Flansch des Gehäuses außen an einer Wandung des Rohrsystems ab. Innerhalb des Gehäuses ist das Messelement in einer Aussparung eines Plättchens gehalten, das zudem Stützpunkte für Anschlussdrähte und Leiter sowie eine Verankerung für eine Zugentlastung der Leiter besitzt. Mittels einer Wärmeleitpaste ist ein wärmeleitender Kontakt des Messelements mit der Innenwand des Gehäuses hergestellt.

Dadurch, dass der Temperaturfühler in das zu messende Medium eintaucht, kann eine hohe Messgenauigkeit erreicht werden. Der Einbau des Temperaturfühlers erfordert jedoch eine Öffnung der Wandung des Rohrsystems, so dass Undichtigkeiten auftreten können.

Aus der Offenlegungsschrift DE 10 2014 118 206 A1 ist darüber hinaus ein Temperaturfühler mit einem Trägerrohr und einer endseitig am Trägerrohr angeordneten Kappe bekannt, in der ein Messelement aufgenommen ist. Die Kappe ist aus einem besonders wärmeleitfähigen Material gefertigt. Zur Messung der Temperatur einer Oberfläche, beispielsweise der Oberfläche eines Rohrs, das von einem Medium durchströmt wird, wird die Kappe in Kontakt mit der Oberfläche gebracht. Zwar muss in diesem Fall die Wandung des Rohrs nicht durchbrochen werden, so dass die Dichtheit des Rohrs gewährleistet ist. Die Temperatur des Mediums lässt sich jedoch nur indirekt ermitteln.

Weitere Sensoren des Stands der Technik sind beispielsweise aus WO2011/042023 A1, JPS57168030 U, US2017/284870 A1, und DE102013200772 A1 bekannt.

Ausgehend von dem vorstehend genannten Stand der Technik liegt der vorliegenden Erfindung die Aufgabe zugrunde, einen elektrischen Sensor, insbesondere einen Temperatursensor, bereitzustellen, der besonders einfach in ein medienführendes Rohr- bzw. Leitungssystem zu integrieren ist, um eine Eigenschaft des Mediums, insbesondere die Temperatur des Mediums, zu messen. Ferner soll der Sensor eine hohe Messgenauigkeit und ein verbessertes Ansprechverhalten aufweisen.

Zur Lösung der Aufgabe wird der elektrische Sensor mit den Merkmalen des Anspruchs 1 vorgeschlagen. Vorteilhafte Weiterbildungen der Erfindung sind den jeweiligen Unteransprüchen zu entnehmen. Ferner wird eine medienführende Leitung mit einem erfindungsgemäßen elektrischen Sensor angegeben.

### Offenbarung der Erfindung

Das vorgeschlagene Trägerelement ist zumindest abschnittsweise rohrförmig ausgeführt und begrenzt einen zumindest einseitig offenen Hohlraum. Erfindungsgemäß ist in einer dem Hohlraum zugewandten und/oder in einer dem Hohlraum abgewandten Oberfläche des Trägerelements mindestens eine Aufnahme für ein elektrisches oder elektronisches Bauelement ausgebildet.

Wie eingangs bereits erwähnt kann es sich bei dem elektrischen oder elektronischen Bauelement sowohl um ein aktives, als auch um ein passives Bauelement handeln. Zur Realisierung eines Sensors wird bevorzugt ein Mess- oder Sensorelement als elektrisches oder elektronisches Bauelement verwendet. Zur Realisierung eines Temperatursensors kann beispielsweise ein Temperaturmessfühler, insbesondere in Form eines Messwiderstands, eingesetzt werden. Alternativ oder ergänzend kann zur Realisierung eines Drucksensors ein Druckmesselement in das Trägerelement integriert werden. Das mindestens eine elektrische oder elektronische Bauelement muss jedoch nicht zwingend der Temperatur- und/oder Druckmessung dienen. Es können mit Hilfe des mindestens einen elektrischen oder elektronischen Bauelements auch völlig andere Funktionalitäten realisiert werden. Beispielsweise kann mit Hilfe eines elektrischen oder elektronischen Bauelements die Strömungsgeschwindigkeit in einer medienführenden Leitung gemessen werden. Beispielhaft für ein aktives Bauelement kann auf ein wärmeemittierendes Bauelement verwiesen werden, das als Heizelement zur Erwärmung des die Leitung durchströmenden Mediums einsetzbar ist.

Zum Schutz des elektrischen oder elektronischen Bauelements vor äußeren Einwirkungen wird erfindungsgemäß das vorgeschlagene Trägerelement nach dem Bestücken mit dem mindestens einen Bauelement umspritzt. Die Umspritzung kann das Trägerelement allseitig umschließen oder lediglich bereichsweise, beispielsweise lediglich im Bereich des mindestens einen elektrischen oder elektronischen Bauelements angeordnet sein. Aufgrund seiner tragenden Funktion kann das Trägerelement auch als "Chassis" bezeichnet werden.

Bei dem Trägerelement handelt es sich bevorzugt um ein vorgefertigtes Bauteil, auf dessen Basis beispielsweise ein elektrischer Sensor aufgebaut werden kann. Im Unterschied zu einer herkömmlichen Leiterplatte oder Platine, ist das Trägerelement jedoch nicht plattenförmig, sondern zumindest abschnittsweise rohrförmig ausgeführt. In zumindest einem Abschnitt weist demnach das Trägerelement einen hohlraumumschließenden ringförmigen Querschnitt auf.

Die vorgeschlagene Querschnittsform führt zu einer erhöhten Formsteifigkeit, insbesondere zu einer erhöhten Biegesteifigkeit und Torsionssteifigkeit, des Trägerelements. Wird das Trägerelement nach dem Bestücken mit dem mindestens einen elektrischen oder elektronischen Bauelement umspritzt, kann das Bauelement mit Hilfe des Trägerelements exakt in einer Spritzgussform positioniert und gehalten werden. Dies führt zu einer definierten Überdeckung des Bauelements mit dem Umspritzungsmaterial. Auf diese Weise kann ein elektrischer Sensor hergestellt werden, der eine sehr hohe Messgenauigkeit aufweist.

Darüber hinaus weist die vorgeschlagene Querschnittsform des erfindungsgemäßen Trägerelements weitere Vorteile auf.

Beispielsweise ermöglicht die vorgeschlagene Querschnittsform die Ausbildung eines zumindest abschnittsweise rohrförmigen elektrischen Sensors, so dass dieser in einfacher Weise in eine medienführende Leitung integrierbar ist. Beispielsweise kann ein aus einem erfindungsgemäßen Trägerelement ausgebildeter elektrischer Sensor selbst einen Leitungsabschnitt ausbilden oder in der Weise in einen Leitungsabschnitt eingesetzt sein, dass er von dem Medium durchströmt wird. Der durch das Trägerelement bzw. den elektrischen Sensor begrenzte Hohlraum kann somit als Strömungspfad für das Medium genutzt werden.

Um einen Strömungspfad für das Medium auszubilden, ist vorzugsweise der durch das Trägerelement und/oder den elektrischen Sensor begrenzte Hohlraum nicht nur einseitig, sondern beidseitig offen ausgeführt. Beispielsweise kann bzw. können das Trägerelement und/oder der elektrische Sensor über seine bzw. ihre gesamte Länge rohrförmig ausgebildet sein.

Alternativ oder ergänzend kann in einem rohrförmigen Abschnitt des Trägerelements und/oder des elektrischen Sensors mindestens eine Öffnung vorgesehen sein, die den Hohlraum mit dem Außenraum verbindet. Die mindestens eine Öffnung ist hierzu in einem den Hohlraum begrenzenden Wandabschnitt des Trägerelements ausgeführt. Zur Ausbildung der mindestens einen Öffnung kann beispielsweise ein den Hohlraum begrenzender Wandabschnitt des Trägerelements eine Bohrung und/oder einen Schlitz aufweisen. Wird die mindestens eine Öffnung nicht als Strömungspfad für ein Medium genutzt, kann sie der Aufnahme eines elektrischen oder elektronischen Bauelements dienen bzw. eine entsprechende Aufnahme ausbilden. Zum Einsetzen eines aus einem erfindungsgemäßen Trägerelement ausgebildeten elektrischen Sensors in eine medienführende Leitung muss keine Wandung der Leitung geöffnet werden, so dass Undichtigkeiten nicht zu befürchten sind. Dadurch, dass der elektrische Sensor von dem Medium durchströmt oder zumindest umströmt wird, kann eine hohe Messgenauigkeit erzielt werden. Zugleich wird die Ansprechzeit des Sensors optimiert.

Die Integration eines aus einem erfindungsgemäßen Trägerelement ausgebildeten elektrischen Sensors in eine medienführende Leitung kann in der Weise erfolgen, dass der Strömungsquerschnitt der Leitung nicht verringert wird. Beispielsweise kann der elektrische Sensor flächenbündig in eine Wandung der Leitung integriert werden. Alternativ kann der elektrische Sensor derart in eine medienführende Leitung integriert werden, dass der Strömungsquerschnitt der medienführenden Leitung gezielt verringert wird, um beispielsweise eine Drosselung und/oder eine Strömungslenkung zu bewirken.

Des Weiteren kann ein erfindungsgemäßer elektrischer Sensor in einer Weise in eine medienführenden Leitung integriert werden, dass der Sensor in das Medium eintaucht. Der Sensor wird in diesem Fall zumindest bereichsweise von dem Medium umströmt. Zur Optimierung der Strömung in der Leitung wird dabei bevorzugt der Sensor parallel zur Hauptströmungsrichtung innerhalb der Leitung ausgerichtet. Darüber hinaus kann der Sensor in einer Weise in eine medienführende Leitung integriert werden, dass mit Hilfe des Sensors der Hauptstrom eines Mediums in mindestens zwei Teilströme aufgeteilt wird.

Alternativ oder ergänzend wird vorgeschlagen, dass ein erfindungsgemäßer elektrischer Sensor in der Weise in eine medienführende Leitung integriert wird, dass der Sensor mit einer Wandung der Leitung mindestens einen weiteren Hohlraum ausbildend zusammenwirkt. Der weitere Hohlraum kann ebenfalls zur Medienführung oder zur Ausbildung eines Hohlraums genutzt werden, der gegenüber dem medienführenden Bereich fluiddicht abgetrennt ist, um beispielsweise ein weiteres elektrisches oder elektronisches Bauelement und/oder eine elektrische Leitung aufzunehmen. Auch in diesem Fall erfolgt vorzugsweise die Ausrichtung des elektrischen Sensors im Wesentlichen parallel zur Hauptströmungsrichtung innerhalb der medienführenden Leitung.

Die vorstehend beschriebenen Anwendungsbeispiele zeigen, dass ein erfindungsgemäßer elektrischer Sensor im Querschnitt nicht zwingend eine kreisförmige Außenkontur und/oder eine kreisförmige hohlraumbegrenzende Innenkontur aufweisen muss, sondern auch eine von der Kreisform abweichende Außenkontur und/oder hohlraumbegrenzende Innenkontur aufweisen kann. Entsprechend kann auch das Trägerelement im Querschnitt eine von der Kreisform abweichende Außenkontur und/oder hohlraumbegrenzende Innenkontur aufweisen. Im Bereich eines rohrförmigen Abschnitts kann das Trägerelement zudem einen Querschnitt aufweisen, der eine von der Außenkontur abweichende hohlraumbegrenzende Innenkontur aufweist. Das heißt, dass Außen- und Innenkontur des Trägerelements im Bereich des rohrförmigen Abschnitts unterschiedlich geformt sein können, so dass die Wandstärke des rohrförmigen Abschnitts über den Umfang bzw. in Umfangsrichtung variiert. Gleiches gilt, wenn das Trägerelement über seine gesamte Länge rohrförmig ausgeführt ist.

Gemäß einer bevorzugten Ausführungsform der Erfindung weist das Trägerelement zumindest in einem Abschnitt eine von der Kreisform abweichende Außenkontur und/oder eine von der Kreisform abweichende hohlraumbegrenzende Innenkontur auf. Das Trägerelement ermöglicht somit die Ausbildung einer Vielzahl unterschiedlicher elektrischer Sensoren, die vielseitig einsetzbar sind.

Des Weiteren bevorzugt ist das Trägerelement über seine gesamte Länge rohrförmig ausgeführt. Der im Trägerelement ausgebildete Hohlraum kann somit zur Ausbildung eines Strömungskanals für ein Medium genutzt werden. Wird das Trägerelement nach dem Bestücken mit mindestens einem elektrischen oder elektronischen Bauelement umspritzt, ist die Umspritzung derart anzuordnen, dass ein durchgehender Hohlraum verbleibt. Zur Ausbildung eines abzweigenden weiteren Strömungskanals und/oder zur Ausbildung einer Aufnahme für ein elektrisches oder elektronisches Bauelement kann im Trägerelement ferner mindestens eine seitliche Öffnung vorgesehen sein, welche einen hohlraumbegrenzenden Wandungsabschnitt des Trägerelements durchsetzt und den Hohlraum nach außen öffnet. Die Öffnung kann beispielsweise als Schlitz oder Fenster ausgebildet sein. Das Trägerelement kann dabei über den Umfang bzw. in Umfangsrichtung eine gleich bleibende oder variierende Wandstärke aufweisen. Ferner kann die Wandstärke in Längsrichtung des Trägerelements variieren, so dass beispielsweise das Trägerelement zumindest abschnittsweise eine konisch geformte Außen- oder Innenkontur besitzt.

Das erfindungsgemäße Trägerelement weist aufgrund seiner Querschnittsform eine hohe Formsteifigkeit auf. Wie bereits erwähnt, muss ein ringförmiger Querschnitt nicht zwingend kreisringförmig sein, sondern kann auch eine von der Kreisform abweichende Außenkontur und/oder Innenkontur besitzen. Beispielsweise kann bzw. können die Außenkontur und/oder die Innenkontur die Form einer Ellipse oder eines Vielecks aufweisen. Alternativ kann bzw. können die Außenkontur und/oder die Innenkontur eine Freiform bilden. Darüber hinaus kann die Querschnittsform des Trägerelements über seine Länge bzw. in Längsrichtung variieren.

Die hohe Formsteifigkeit des Trägerelements wirkt beim Umspritzen einer unerwünschten Verformung des Trägerelements entgegen. Mit Hilfe des Trägerelements kann somit das mindestens eine elektrische oder elektronische Bauelement exakt in einer Spritzgussform positioniert und gehalten werden, so dass eine definierte Überdeckung des Bauelements mit dem Umspritzungsmaterial gewährleistet ist. Das Trägerelement kann somit beim Umspritzen als Positionierhilfe eingesetzt werden.

Beim Bestücken des Trägerelements mit dem mindestens einen elektrischen oder elektronischen Bauelement wird vorzugsweise zugleich eine Lagefixierung des Bauelements erreicht. Bevorzugt ist daher die mindestens eine Aufnahme für das Bauelement als eine Ausnehmung im Trägerelement ausgeführt. Das Bauelement kann somit - ganz oder teilweise - in die Ausnehmung eingesetzt werden, so dass es gegen Verrutschen gesichert ist. Vorzugsweise sind die Abmessungen der Ausnehmung an die Abmessungen des hierin einzusetzenden elektrischen oder elektronischen Bauelements angepasst, so dass das Bauelement in mindestens zwei Raumrichtungen gegen Verrutschen gesichert ist. Die Lagefixierung des Bauelements über das Trägerelement wirkt insbesondere einer Lageveränderung des Bauelements bei einem nachfolgenden Umspritzungsvorgang entgegen.

Des Weiteren wird vorgeschlagen, dass an die mindestens eine Aufnahme mindestens ein Führungskanal zur Führung eines oder mehrerer Anschlussdrähte des elektrischen oder elektronischen Bauelements oder einer elektrischen Anschlussleitung anschließt. Mehrere Anschlussdrähte können dabei auch eine Anschlusslitze ausbilden, die aus mehreren Einzeldrähten besteht. Sofern der Anschlussdraht oder die Anschlusslitze eine isolierende Ummantelung aufweist, wird diese bevorzugt vor dem Einlegen des Anschlussdrahts bzw. der Anschlusslitze in den Führungskanal entfernt.

Der mindestens eine Führungskanal verläuft vorzugsweise in Längsrichtung und/oder ist als Längsnut im Trägerelement ausgeführt. Das heißt, dass der mindestens eine Führungskanal im Wesentlichen parallel zu einer Längsachse des Trägerelements verläuft. Der Führungskanal kann somit einen geraden Verlauf aufweisen, so dass die Anschlussdrähte nicht gebogen werden müssen. Mehrere Führungskanäle sind vorzugsweise in einem Abstand, insbesondere in einem Winkelabstand, zueinander angeordnet, so dass sie durch einen Steg des Trägerelements voneinander getrennt werden. Auf diese Weise kann ein elektrischer Kurzschluss verhindert werden.

Die mindestens eine Aufnahme für ein elektrisches oder elektronisches Bauelement und/oder der mindestens eine Führungskanal zur Führung eines oder mehrerer Anschlussdrähte kann bzw. können sowohl in der dem Hohlraum zugewandten Oberfläche als auch in der dem Hohlraum abgewandten Oberfläche des Trägerelements ausgebildet sein. Das Einsetzen des Bauelements in die Aufnahme und/oder das Einlegen der Anschlussdrähte in den mindestens einen Führungskanal kann dadurch vereinfacht werden, dass die Aufnahme und/oder der Führungskanal in der dem Hohlraum abgewandten Oberfläche des Trägerelement, das heißt außenseitig angeordnet ist bzw. sind. Handelt es sich bei dem elektrischen oder elektronischen Bauelement beispielsweise um einen unbedrahteten Messwiderstand in SMD-Bauform, kann bei außenseitiger Anordnung die erforderliche elektrische Kontaktierung des Messwiderstands vereinfacht werden. Die innenseitige Anordnung des elektrischen oder elektronischen Bauelements besitzt demgegenüber den Vorteil, dass der Abstand des Bauelements zum Medium verringert werden kann.

Bevorzugt weist das Trägerelement mehrere Aufnahmen auf, so dass es mit mehreren elektrischen oder elektronischen Bauelementen bestückt werden kann. Beispielsweise kann das Trägerelement mit mehreren gleichartigen Bauelementen bestückt werden, so dass ein redundantes System geschaffen wird, das eine erhöhte Ausfall- und damit Funktionssicherheit besitzt. Alternativ kann das Trägerelement mit mehreren unterschiedlichen Bauelementen, beispielsweise mit mehreren unterschiedliche Messbereiche abdeckenden Messwiderständen bestückt werden. Auf diese Weise kann ein elektrischer Sensor geschaffen werden, der über einen sehr breiten Messbereich einsetzbar ist.

Die mehreren Aufnahmen sind vorzugsweise in Umfangsrichtung des Trägerelements in einem Abstand, insbesondere in einem Winkelabstand, zueinander angeordnet. Dadurch ist sichergestellt, dass an die Aufnahmen anschließende, sich in Längsrichtung erstreckende Führungskanäle ebenfalls in einem Abstand, insbesondere in einem Winkelabstand, zueinander zu liegen kommen, so dass die Gefahr eines elektrischen Kurzschlusses verringert wird.

In Weiterbildung der Erfindung wird vorgeschlagen, dass das Trägerelement drehsymmetrisch ausgebildet ist, so dass es auf sich selbst abgebildet wird, wenn es um seine Längsachse um einen vorgegebenen Winkel gedreht wird. Die mehreren Aufnahmen und/oder Führungskanäle sind hierzu jeweils in gleichem Winkelabstand zueinander angeordnet. Auf diese Weise wird der auf dem Trägerelement vorhandene Platz für die Bestückung mit mehreren elektrischen oder elektronischen Bauelementen optimal genutzt.

Bevorzugt ist das Trägerelement zumindest abschnittsweise aus Kunststoff, vorzugsweise aus einem elektrisch isolierenden und/oder thermisch leitfähigen Kunststoff, gefertigt. Bei Verwendung eines elektrisch isolierenden Kunststoffs kann das Trägerelement zugleich als Isolierteil eingesetzt werden, so dass eine zusätzliche elektrische Isolierung entbehrlich ist. Durch Verwendung eines thermisch leitfähigen Kunststoffs kann die Ansprechzeit eines der Temperaturmessung oder der Beheizung dienenden elektrischen oder elektronischen Bauelements verbessert werden. Dies gilt insbesondere, wenn das Bauelement zumindest durch einen Wandabschnitt des Trägerelements von dem zu messenden Medium getrennt ist.

Ferner bevorzugt ist das Trägerelement ein Spritzgussteil, das heißt ein durch Spritzgießen hergestelltes Formteil. Auf diese Weise lässt sich das Trägerelement in großen Stückzahlen besonders einfach und kostengünstig herstellen.

Der darüber hinaus zur Lösung der eingangs genannten Aufgabe vorgeschlagene elektrische Sensor, insbesondere Temperatursensor, weist ein erfindungsgemäßes Trägerelement sowie mindestens ein elektrisches oder elektronisches Bauelement auf. Das Bauelement ist dabei in einer Aufnahme des Trägerelements aufgenommen. Vorzugsweise ist das Bauelement durch das Trägerelement in mindestens einer Raumrichtung lagefixiert. Die Lagefixierung wirkt einer Relativbewegung des Bauelements in Bezug auf das Trägerelement entgegen. Zugleich wird über die Formsteifigkeit des Trägerelements, die vorrangig auf die Querschnittsform des Trägerelements zurückzuführen ist, eine hohe mechanische Stabilität erreicht. Das Trägerelement ermöglicht somit bei einem nachträglichen Umspritzungsvorgang eine exakte Positionierung des elektrischen oder elektronischen Bauelements in der Form, so dass eine definierte Überdeckung des Bauelements mit dem Umspritzungsmaterial erreicht wird. Der auf diese Weise geschaffene elektrische Sensor weist somit eine hohe Messgenauigkeit auf.

Bei dem erfindungsgemäßen elektrischen Sensor gibt vorzugsweise das erfindungsgemäße Trägerelement die Grundform des Sensors vor. Bevorzugt ist daher der elektrische Sensor über seine gesamte Länge oder abschnittsweise rohrförmig ausgeführt. Der vorgeschlagene elektrische Sensor kann somit in der Weise in eine medienführende Leitung integriert werden, dass er selbst und/oder in Verbindung mit der Leitung mindestens einen als Strömungspfad für das Medium nutzbaren Hohlraum begrenzt.

Der vorgeschlagene elektrische Sensor kann im Bereich des rohrförmigen Abschnitts im Querschnitt eine kreisförmige oder eine von der Kreisform abweichende Außenkontur und/oder Innenkontur aufweisen. Die Querschnittsform kann zudem über die Länge des elektrischen Sensors variieren. Weiterhin vorzugsweise ist der elektrischer Sensor über seine gesamte Länge rohrförmig ausgeführt. Ein über seine gesamte Länge rohrförmig ausgebildeter elektrischer Sensor besitzt den Vorteil, dass er in der Weise in eine medienführende Leitung integriert werden kann, dass er von dem Medium durchströmt wird. Aufgrund der Nähe zum Medium weist der Sensor eine hohe Messgenauigkeit auf. Zudem muss für den Einbau des Sensors in die Leitung keine Wandung der Leitung geöffnet werden, so dass weiterhin die Dichtheit der Leitung gewährleistet ist. Der Innendurchmesser des rohrförmigen Sensors kann dabei an den Innendurchmesser der Leitung angepasst sein, so dass der freie Strömungsquerschnitt nicht verringert wird. Alternativ kann der Sensor derart bemessen und eingebaut werden, dass eine gezielte Verringerung des freien Strömungsquerschnitts erreicht wird. Der Innendurchmesser des elektrischen Sensors ist vorzugsweise durch das Trägerelement oder durch eine auf dem Trägerelement ausgebildete Umspritzung vorgegeben.

Hinsichtlich der Vorteile eines erfindungsgemäßen elektrischen Sensors und konkreter Anwendungsbeispiele wird auf die zuvor bereits in Verbindung mit dem erfindungsgemäßen Trägerelement beschriebenen Vorteile und Anwendungsbeispiele verwiesen. Dies gilt insbesondere in Bezug auf die verschiedenen Möglichkeiten zur Integration eines erfindungsgemäßen elektrischen Sensors in eine medienführende Leitung, die sich jeweils aus der konkreten Form des Sensors ergeben.

Vorzugsweise besitzt der elektrische Sensor mehrere elektrische oder elektronische Bauelemente. Davon ist weiterhin vorzugsweise mindestens ein Bauelement ein Messwiderstand. Vorteilhafterweise ist der mindestens eine Messwiderstand ein Platin-Messwiderstand, mit Hilfe dessen Temperaturmessungen durchgeführt werden können. Beispielsweise kann ein Platin-Chip-Temperatursensor mit Anschlussdrähten nach DIN EN 60751, verwendet werden. Dieser weist eine flache Bauform mit seitlich austretenden Anschlussdrähten auf. Alternativ kann ein Platin-Messwiderstand in SMD-Bauform (engl.: "surface-mounted device") verwendet werden, der keine Anschlussdrähte besitzt. Darüber hinaus kann ein NTC-Widerstand (engl.: "negative temperature coefficient") als Messwiderstand eingesetzt werden, der besonders kleinvolumig ist und demnach die Ausbildung eines miniaturisierten Temperatursensors ermöglicht.

Werden mehrere gleiche Messwiderstände verwendet, die redundante Informationen liefern, kann das Ausfallrisiko minimiert bzw. die Funktionssicherheit des Sensors erhöht werden. Wird das Trägerelement - je nach Bedarf - mit Messwiderständen unterschiedlicher Charakteristik bestückt, beispielsweise mit Messwiderständen, die unterschiedliche Ansprechzeiten und/oder unterschiedliche elektrische Anschlusswerte aufweisen, kann ein Sensor geschaffen werden, der nicht nur eine hohe Messgenauigkeit besitzt, sondern zudem einen breiten Messbereich abdeckt. Weist das mindestens eine elektrische oder elektronische Bauelement Anschlussdrähte auf, sind diese bevorzugt in mindestens einem Führungskanal des Trägerelements aufgenommen. Vorzugsweise ist jeder Anschlussdraht in einen eigenen Führungskanal eingelegt, um einen elektrischen Kurzschluss zu verhindern.

Erfindungsgemäß ist das Trägerelement zumindest bereichsweise, vorzugsweise im Bereich des mindestens einen elektrischen oder elektronischen Bauelements, mit einem Kunststoff umspritzt. Die Kunststoff-Umspritzung schützt das Bauelement vor äußeren Einwirkungen. Insbesondere wird über die Kunststoff-Umspritzung eine Abdichtung des Sensors erreicht, welche die elektrischen oder elektronischen Bauelemente vor Feuchtigkeit und/oder aggressiven Medien schützt. Entsprechend steigt die Robustheit des elektrischen Sensors, der somit vielseitig einsetzbar und/oder integrierbar ist.

Der Kunststoff der Umspritzung im Bereich des mindestens einen elektrischen oder elektronischen Bauelements ist erfindungsgemäß ein elektrisch isolierender und/oder thermisch leitfähiger Kunststoff. Bei Verwendung eines elektrisch isolierenden Kunststoffs wird zugleich eine elektrische Isolierung der umspritzten Bauelemente und/oder Anschlussdrähte erreicht. Durch Verwendung eines thermisch leitfähigen Kunststoffs kann das Ansprechverhalten verbessert werden, wenn es sich bei dem elektrischen Sensor um einen Temperatursensor handelt. Der thermisch leitfähige Kunststoff trägt ferner dazu bei, dass der elektrische Sensor, insbesondere Temperatursensor, eine hohe Messgenauigkeit aufweist.

In Abhängigkeit von der Lage des mindestens einen elektrischen oder elektronischen Bauelements kann bzw. können die dem Hohlraum zugewandte Oberfläche und/oder die dem Hohlraum abgewandte Oberfläche und/oder mindestens eine Stirnfläche des Trägerelements zumindest bereichsweise mit dem Kunststoff umspritzt sein. Durch die Kunststoff-Umspritzung wird vorzugsweise das mindestens eine elektrische oder elektronische Bauelement vollständig von dem Kunststoff überdeckt, um bei Integration des Sensors in eine medienführende Leitung einen direkten Kontakt des Messwiderstands mit dem Medium zu verhindern.

Erfindungsgemäß ist das Trägerelement zumindest bereichsweise mit unterschiedlichen Kunststoffen umspritzt, wobei vorzugsweise ein erster Kunststoff ein thermisch leitfähiger Kunststoff und ein weiterer Kunststoff ein thermisch nichtleitfähiger Kunststoff ist. Die Verwendung des thermisch leitfähigen Kunststoffs kann dann auf den Bereich eines der Temperaturmessung dienenden elektrischen oder elektronischen Bauelements beschränkt werden, um eine hohe Messgenauigkeit und kurze Ansprechzeiten zu erreichen. In den übrigen Bereichen kann ein herkömmlicher nicht thermisch leitfähiger Kunststoff zum Umspritzen verwendet werden. Da sich unterschiedliche Kunststoffe oftmals besser verbinden lassen als gleichartige Kunststoffe, können Übergänge geschaffen werden, die sehr dicht sind. Somit bleibt die erforderliche Abdichtung gewährleistet.

In Weiterbildung der Erfindung wird vorgeschlagen, dass der elektrische Sensor mindestens ein weiteres elektrisches oder elektronisches Bauelement aufweist. Das heißt, dass der elektrische Sensor bei Bedarf zusätzliche Aufgaben übernehmen kann. Auf diese Weise kann die Funktionalität des elektrischen Sensors gesteigert werden. Das weitere elektrische oder elektronische Bauelement kann dabei unmittelbar oder mittelbar, beispielsweise über eine Kunststoffumspritzung, mit dem Trägerelement des elektrischen Sensors verbunden sein.

Vorzugsweise ist das weitere elektrische oder elektronische Bauelement ein Druckmesselement zur Ausbildung eines Drucksensors. Bei Integration des elektrischen Sensors in eine medienführende Leitung kann somit der Druck in der medienführenden Leitung gemessen werden. Bei dem elektrischen Sensor kann es sich beispielsweise um einen kombinierten Druck-und Temperatursensor handeln. Druckmesselemente zur Ausbildung eines Drucksensors gibt es in miniaturisierter Ausführungsform, so dass die Integration in einen erfindungsgemäßen elektrischen Sensor in einfacher Weise möglich ist.

Bevorzugt ist das mindestens eine weitere elektrische oder elektronische Bauelement umfangseitig oder stirnseitig in den elektrischen Sensor integriert. Beispielsweise kann im Sensor eine umfangseitige oder stirnseitige Ausnehmung ausgebildet sein, in der das Bauelement zumindest bereichsweise aufgenommen ist. Sofern der elektrische Sensor rohrförmig ausgebildet ist, kann das weitere elektrische oder elektronische Bauelement an einem Ende des rohrförmigen elektrischen Sensors angeordnet werden, so dass er den durch den elektrischen Sensor ausgebildeten Hohlraum ganz oder teilweise verschließt.

Da vorzugsweise der erfindungsgemäße elektrische Sensor zur Messung mindestsens einer Eigenschaft, insbesondere der Temperatur, eines strömungsfähigen Mediums in einer Leitung eingesetzt wird, wird ferner eine medienführende Leitung mit einem erfindungsgemäßen elektrischen Sensor vorgeschlagen. Bevorzugt weist die Leitung einen Abschnitt oder einen Abzweig auf, der durch einen erfindungsgemäßen elektrischen Sensor ausgebildet wird und/oder in dem ein erfindungsgemäßer elektrischer Sensor aufgenommen ist. Der elektrische Sensor befindet sich somit im Strömungspfad des Mediums oder bildet selbst einen Teil des Strömungspfads für das Medium aus. Aufgrund der Nähe des elektrischen Sensors zum Medium können kurze Ansprechzeiten und eine hohe Messgenauigkeit erzielt werden. Darüber hinaus muss die Wandung der medienführenden Leitung nicht geöffnet werden, um den elektrischen Sensor zu integrieren. Das heißt, dass die Dichtheit der Leitung nicht beeinträchtigt wird. Der elektrische Sensor ist hierzu bevorzugt in der Weise in die medienführende Leitung integriert, dass eine Längsachse des elektrischen Sensors parallel zur Hauptströmungsrichtung des Mediums ausgerichtet ist.

Die Erfindung und ihre Vorteile werden nachfolgend anhand konkreter Ausführungsbeispiele, die den beigefügten Zeichnungen zu entnehmen sind, näher erläutert. Die Zeichnungen zeigen:
- Fig.1: einen schematischen Längsschnitt durch einen elektrischen Sensor mit einem Trägerelement gemäß einer ersten bevorzugten Ausführungsform der Erfindung,
- Fig. 2: einen schematischen Querschnitt durch den Sensor der Fig. 1,
- Fig. 3: eine Schnittansicht durch einen elektrischen Sensor mit einem Trägerelement gemäß einer zweiten bevorzugten Ausführungsform der Erfindung,
- Fig. 4: eine perspektivische Darstellung des Sensors der Fig. 3,
- Fig. 5: eine perspektivische Darstellung eines mit elektrischen Bauelementen bestückten Trägerelements für einen elektrischen Sensor gemäß einer dritten bevorzugten Ausführungsform der Erfindung und
- Fig. 6: eine perspektivische Darstellung eines mit einem elektrischen Bauelement bestückten Trägerelements für einen elektrischen Sensor gemäß einer vierten bevorzugten Ausführungsform der Erfindung.

### Ausführliche Beschreibung der Zeichnungen

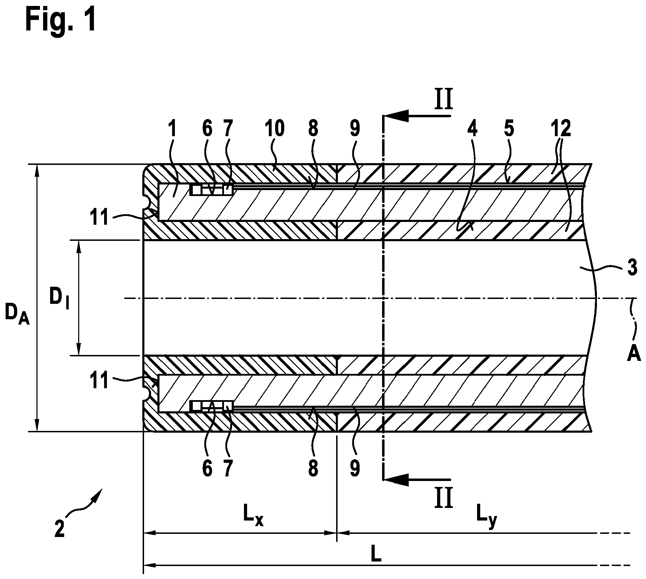

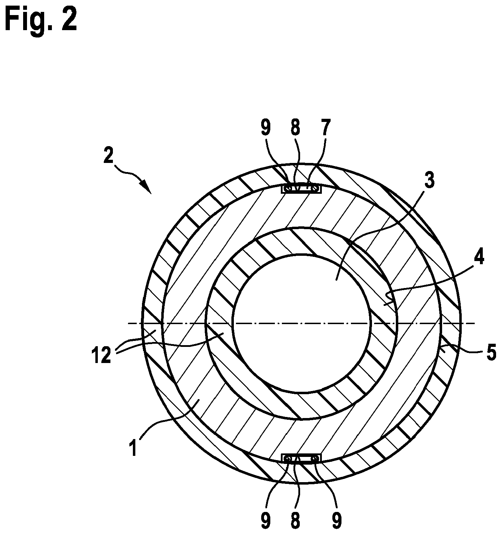

Der in den Figuren 1 und 2 dargestellte erfindungsgemäße elektrische Sensor 2 ist zumindest abschnittsweise als Rohr ausgeführt, wobei das Rohr einen kreisringförmigen Querschnitt besitzt (siehe Fig. 2). Die Querschnittsform des elektrischen Sensors 2 ist durch ein Trägerelement 1 vorgegeben, das ebenfalls rohrförmig ausgeführt ist. Das Trägerelement 1 ist vorliegend mit zwei elektrischen Bauelementen 7 bestückt, die sich am Außenumfang des Trägerelements 1 gegenüberliegen.

Zur Lagefixierung der elektrischen Bauelemente 7 weist das Trägerelement 1 Aufnahmen 6 auf, deren Abmessungen an die Abmessungen der Bauelemente 7 angepasst sind. Die Aufnahmen 6 sind in einer Oberfläche 5 des Trägerelements 1 ausgebildet, die den Außenumfang des rohrförmigen Trägerelements 1 definiert. In derselben Oberfläche 5 sind zudem Führungskanäle 8 ausgebildet, die der Aufnahme von Anschlussdrähten 9 dienen. Die Führungskanäle 8 erstrecken sich in Längsrichtung des Trägerelements 1, das heißt parallel zu einer Längsachse A des Trägerelements 1, welche zugleich eine Längsachse des elektrischen Sensors 2 ausbildet. Dadurch ist sichergestellt, dass sich die Anschlussdrähte 9 nicht kreuzen.

Die Anordnung der elektrischen Bauelemente 7 in der den Außenumfang definierenden Oberfläche 5 des Trägerelements 1 besitzt den Vorteil, dass die Bestückung des Trägerelements 1 mit den Bauelementen 7 vereinfacht wird. Denn die Oberfläche 5 ist leichter zugänglich als eine Oberfläche 4, die einen Hohlraum 3 des rohrförmigen Trägerelements 1 umschließt. Alternativ oder ergänzend kann aber auch die den Hohlraum 3 umschließende Oberfläche 4 des Trägerelements 1 mit mindestens einem Bauelement 7 bestückt werden.

Die im Querschnitt ringförmige Ausbildung des Trägerelements 1 besitzt den Vorteil, dass in einfacher Weise ein elektrischer Sensor 2 mit einem entsprechenden Querschnitt geschaffen werden kann. Ein solcher elektrischer Sensor 2 kann derart in eine medienführende Leitung integriert werden, dass er einen Teil des Strömungspfads des Mediums ausbildet. Das Medium strömt unmittelbar in Längsrichtung, das heißt parallel zur Längsachse A, an dem Sensor 2 vorbei bzw. durch den verbleibenden Hohlraum 3 des Sensors 2 hindurch. Auf diese Weise können kurze Ansprechzeiten und eine hohe Messgenauigkeit realisiert werden.

Bei dem dargestellten elektrischen Sensor 2 kann es sich insbesondere um einen Temperatursensor handeln, der zwei Platin-Messwiderstände als elektrische Bauelemente 7 aufweist. Diese sind vorliegend auf der dem Hohlraum 3 abgewandten Oberfläche 5 des Trägerelements 1 angeordnet. Da vorliegend das Trägerelement 1 aus einem thermisch leitfähigen Kunststoff hergestellt worden ist, stellt die Anordnung der Bauelemente 7 auf der dem Hohlraum 3 abgewandten Oberfläche 5 im Hinblick auf kurze Ansprechzeiten und eine hohe Messgenauigkeit keinen wesentlichen Nachteil dar.

Zum Schutz der elektrischen Bauelemente 7 vor äußeren Einwirkungen, insbesondere vor aggressiven Medien, weist vorliegend das Trägerelement 1 zumindest im Bereich der Bauelemente 7 eine Umspritzung mit einem Kunststoff 10 auf. Hierbei handelt es sich wiederum um einen thermisch leitfähigen Kunststoff 10, um weiterhin kurze Ansprechzeiten und eine hohe Messgenauigkeit zu gewährleisten. Die Umspritzung mit dem Kunststoff 10 erstreckt sich über eine Länge Lx parallel zur Längsachse A, und zwar sowohl auf der Oberfläche 5 als auch auf der Oberfläche 4 des Trägerelements 1. Ferner weist das Trägerelement 1 eine Stirnfläche 11 auf, die ebenfalls mit dem Kunststoff 10 umspritzt ist. Das die Bauelemente 7 aufweisende Ende des Trägerelements 1 ist somit vollständig von dem Kunststoff 10 umgeben. An den Abschnitt mit der Länge Lx schließt sich ein Abschnitt mit einer Länge Ly an, der mit einem weiteren Kunststoff 12 umspritzt ist. Hierbei handelt es sich um einen thermisch nicht leitfähigen Kunststoff. Auch dieser Kunststoff 12 ist sowohl außen- als auch innenumfangseitig auf dem Trägerelement 1 angeordnet, und zwar unmittelbar angrenzend an die Umspritzung mit dem Kunststoff 10. Somit ist das Trägerelement 1 vollständig von Kunststoff umschlossen, was zu einer optimalen Abdichtung führt. Die Umspritzung mit dem weiteren Kunststoff 12 stellt sicher, dass auch die Anschlussdrähte 9 der elektrischen Bauelemente 7 geschützt sind.

Die Dicke der Umspritzung mit den Kunststoffen 10, 12 ist umlaufend gleich gewählt, so dass ein Innendurchmesser D_{I} verbleibt, der dem Innendurchmesser des Trägerelements 1 abzüglich zweimal der Dicke der innenseitigen Umspritzung entspricht. Dieser Querschnitt steht nach Einbau des elektrischen Sensors 2 in eine medienführende Leitung (nicht dargestellt) als Strömungsquerschnitt für das Medium zur Verfügung. Der Außendurchmesser D_{A} entspricht vorliegend dem Außendurchmesser des Trägerelements 1 zuzüglich zweimal der Dicke der außenseitigen Umspritzung. Der elektrische Sensor 2 kann derart ausgelegt werden, dass beispielsweise der Innendurchmesser D_{I} oder der Außendurchmesser D_{A} dem Innendurchmesser der medienführenden Leitung entspricht, so dass der freie Strömungsquerschnitt der Leitung nicht eingeschränkt oder gezielt verringert wird.

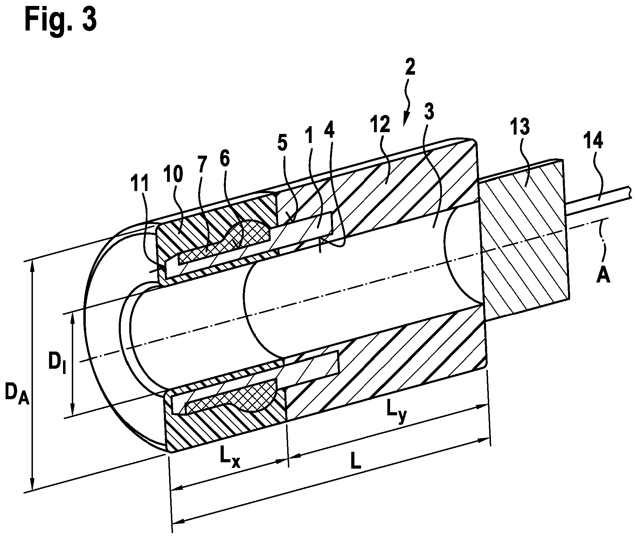

Der Fig. 3 ist eine Abwandlung der zuvor beschriebenen Ausführungsform zu entnehmen. Hier sind in den elektrischen Sensor 2 elektrische Bauelemente / in Form von Messwiderständen zur Temperaturmessung sowie ein weiteres elektrisches Bauelement 13 integriert. Das weitere elektrische Bauelement 13, wobei es sich vorliegend um ein Druckmesselement zur Ausbildung eines Drucksensors handelt, ist stirnseitig angeordnet und über eine Umspritzung mit einem Kunststoff 12 mit dem Trägerelement 1 verbunden.

Der in der Fig. 3 dargestellte elektrische Sensor 2 kann in der Weise in eine medienführende Leitung integriert werden, dass die Längsachse A des Sensors 2 parallel zur Hauptströmungsrichtung des Mediums innerhalb der Leitung ausgerichtet ist und ein Teil des Mediums in den Hohlraum 3 des Sensors 2 strömt. Um den Durchfluss durch die Leitung zu gewährleisten, wird vorzugsweise der Außendurchmesser D_{A} des elektrischen Sensors 2 kleiner als der Innendurchmesser der Leitung gewählt, so dass das Medium sowohl in den Sensor 2, als auch außen am Sensor 2 vorbei strömt. Mit Hilfe des weiteren elektrischen Bauelements 13 kann zusätzlich der Druck in der medienführenden Leitung gemessen werden.

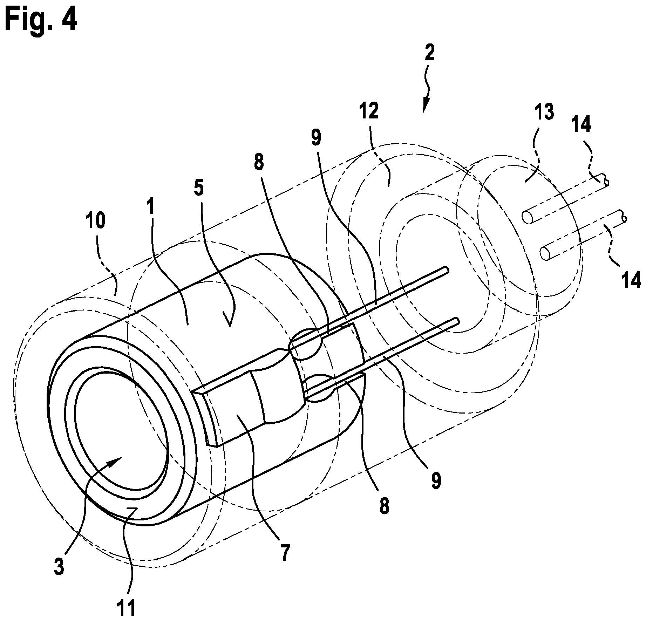

Der elektrische Sensor 2 der Fig. 3 weist zudem bedrahtete Messwiderstände als Bauelemente 7 auf. Das heißt, dass die Messwiderstände mit Anschlussdrähten 9 versehen sind (siehe Fig. 4), die beim Einsetzen der Messwiderstände in Aufnahmen 6 in Führungskanäle 8 eingelegt werden (siehe Fig. 4). Es entfällt somit der Schritt der elektrischen Kontaktierung der Messwiderstände. Das stirnseitig angeordnete weitere elektrische Bauelement 13 weist Anschlussleitungen 14 auf, die stirnseitig aus dem Bauelement 13 herausgeführt sind (siehe Fig. 4).

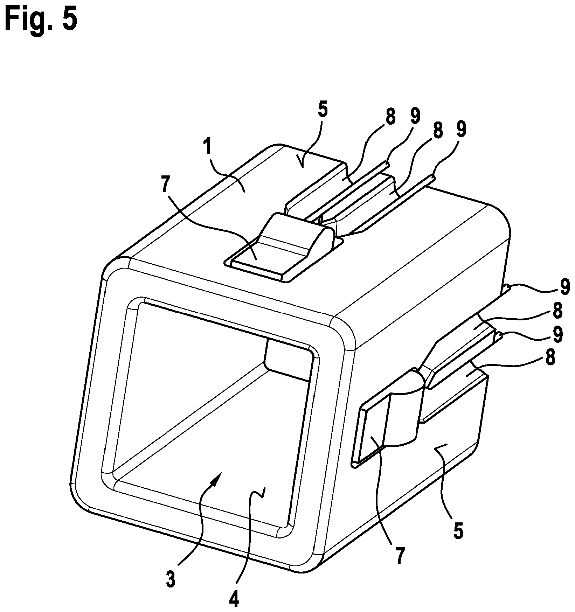

Der Fig. 5 ist ein erfindungsgemäßes Trägerelement 1 zur Ausbildung eines elektrischen Sensors 2 zu entnehmen, das zwei bedrahtete Messwiderstände als elektrische Bauelemente 7 aufweist. Im Unterschied zu den Ausführungsformen der Figuren 1 bis 4 weist hier das rohrförmige Trägerelement 1 keinen kreisringförmigen Querschnitt, sondern einen quadratischen Querschnitt auf. Das Trägerelement 1 weist im Querschnitt sowohl eine quadratische Außenkontur als auch eine quadratische Innenkontur auf. Die Außen- und Innenecken sind jeweils leicht abgerundet. Die Messwiderstände sind beispielhaft in zwei über Eck angeordneten, den Hohlraum 3 begrenzenden Wänden des Trägerelements 1 aufgenommen, und zwar jeweils in einer dem Hohlraum 3 abgewandten Oberfläche 5 des Trägerelements 1.

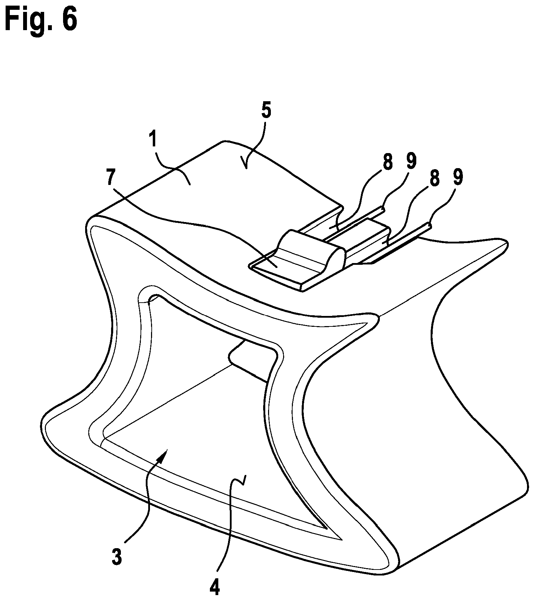

Eine weitere bevorzugte Ausführungsform eines erfindungsgemäßen Trägerelements 1 für einen elektrischen Sensor 2 ist in der Fig. 6 dargestellt. Das Trägerelement 1 ist ebenfalls rohrförmig ausgeführt, wobei der Querschnitt bzw. die Querschnittsform des Trägerelements 1 auf einer Freiform beruht. Der Hohlraum 3 wird von unterschiedlich stark konkav oder konvex gewölbten Wänden begrenzt. In einer Wand, und zwar in einer dem Hohlraum 3 abgewandten Oberfläche 5, ist ein elektrisches Bauelement 7 in Form eines Messwiderstands in einer Aufnahme 6 aufgenommen.

### Bezugszeichenliste

- 1: Trägerelement
- 2: Sensor
- 3: Hohlraum
- 4: Oberfläche
- 5: Oberfläche
- 6: Aufnahme
- 7: Bauelement
- 8: Führungskanal
- 9: Anschlussdraht
- 10: Kunststoff
- 11: Stirnfläche
- 12: Kunststoff
- 13: Bauelement
- 14: Anschlussleitung

## Patentansprüche

1. Elektrischer Sensor (2), insbesondere Temperatursensor, mit einem Trägerelement (1) und mindestens einem elektrischen oder elektronischen Bauelement (7), das in einer Aufnahme (6) des Trägerelements (1) aufgenommen und vorzugsweise durch das Trägerelement (1) in mindestens einer Raumrichtung lagefixiert ist, wobei das Trägerelement (1) zumindest abschnittsweise rohrförmig ausgeführt ist und einen zumindest einseitig offenen Hohlraum (3) begrenzt, und wobei in einer dem Hohlraum (3) zugewandten Oberfläche (4) oder in einer dem Hohlraum (3) abgewandten Oberfläche (5) des Trägerelements (1) die Aufnahme (6) für das elektrische oder elektronische Bauelement (7) ausgebildet ist,
**dadurch gekennzeichnet, dass** das Trägerelement (1) zumindest bereichsweise mit unterschiedlichen Kunststoffen (10, 12) umspritzt ist, wobei vorzugsweise ein erster Kunststoff (10) ein thermisch leitfähiger Kunststoff und ein weiterer Kunststoff (12) ein thermisch nichtleitfähiger Kunststoff ist, und wobei das Trägerelement (1) im Bereich des mindestens einen elektrischen oder elektronischen Bauelements (7) mit einem Kunststoff (10) umspritzt ist, der ein elektrisch isolierender und/oder thermisch leitfähiger Kunststoff ist.

2. Elektrischer Sensor (2) nach Anspruch 1,
**dadurch gekennzeichnet, dass** das Trägerelement (1) zumindest in einem Abschnitt eine von der Kreisform abweichende Außenkontur und/oder eine von der Kreisform abweichende hohlraumbegrenzende Innenkontur aufweist.

3. Elektrischer Sensor (2) nach Anspruch 1 oder 2,
**dadurch gekennzeichnet, dass** die mindestens eine Aufnahme (6) als eine Ausnehmung im Trägerelement (1) ausgeführt ist, wobei vorzugsweise die Abmessungen der Ausnehmung an die Abmessungen des hierin einzusetzenden elektrischen oder elektronischen Bauelements (7) angepasst sind.

4. Elektrischer Sensor (2) nach einem der vorhergehenden Ansprüche,
**dadurch gekennzeichnet, dass** an die mindestens eine Aufnahme (6) mindestens ein Führungskanal (8) zur Führung eines oder mehrerer Anschlussdrähte (9) des elektrischen oder elektronischen Bauelements (7) oder einer elektrischen Anschlussleitung anschließt, wobei vorzugsweise der Führungskanal (8) in Längsrichtung verläuft und/oder als Längsnut im Trägerelement (1) ausgeführt ist.

5. Elektrischer Sensor (2) nach einem der vorhergehenden Ansprüche,
**dadurch gekennzeichnet, dass** das Trägerelement (1) mehrere Aufnahmen (6) aufweist, die vorzugsweise in Umfangsrichtung des Trägerelements (1) in einem Abstand, insbesondere in einem Winkelabstand, zueinander angeordnet sind.

6. Elektrischer Sensor (2) nach einem der vorhergehenden Ansprüche,
**dadurch gekennzeichnet, dass** das Trägerelement (1) zumindest abschnittsweise aus Kunststoff, vorzugsweise aus einem elektrisch isolierenden und/oder thermisch leitfähigen Kunststoff, gefertigt ist und/oder ein Spritzgussteil ist.

7. Elektrischer Sensor (2) nach einem der vorhergehenden Ansprüche,
**dadurch gekennzeichnet, dass** das elektrische oder elektronische Bauelement (7) ein Messwiderstand, beispielsweise ein Platin-Messwiderstand, insbesondere ein Platin-Messwiderstand in SMD-Bauform, oder ein NTC-Widerstand ist.

8. Elektrischer Sensor (2) nach einem der vorhergehenden Ansprüche,
**dadurch gekennzeichnet, dass** das elektrische oder elektronische Bauelement (7) Anschlussdrähte (9) aufweist, die in mindestens einem Führungskanal (8) des Trägerelements (1) aufgenommen sind.

9. Elektrischer Sensor (2) nach Anspruch 1, **dadurch gekennzeichnet, dass** die dem Hohlraum (3) zugewandte Oberfläche (4) und/oder die dem Hohlraum (3) abgewandte Oberfläche (5) und/oder mindestens eine Stirnfläche (11) des Trägerelements (1) zumindest bereichsweise mit dem Kunststoff (10) umspritzt ist bzw. sind.

10. Elektrischer Sensor (2) nach einem der vorhergehenden Ansprüche,
**dadurch gekennzeichnet, dass** der elektrische Sensor (2) mindestens ein weiteres elektrisches oder elektronisches Bauelement (13) umfasst, das vorzugsweise ein Druckmesselement zur Ausbildung eines Drucksensors ist.

11. Elektrischer Sensor (2) nach Anspruch 10,
**dadurch gekennzeichnet, dass** das mindestens eine weitere elektrische oder elektronische Bauelement (13) umfangseitig oder stirnseitig in den elektrischen Sensor (2) integriert ist.

12. Medienführende Leitung mit einem Abschnitt oder einem Abzweig, der durch einen elektrischen Sensor (2) nach einem der Ansprüche 1 bis 11 ausgebildet wird und/oder in dem ein elektrischer Sensor (2) nach einem der Ansprüche 1 bis 11 aufgenommen ist.

## Claims

1. Electrical sensor (2), in particular temperature sensor, having a carrier element (1) and at least one electrical or electronic component (7), which is received in a receiving arrangement (6) of the carrier element (1) and is preferably fixed in position by the carrier element (1) in at least one spatial direction, wherein the carrier element (1) is embodied in a tubular manner at least in sections and delimits a cavity (3) that is open at least on one side, and wherein the receiving arrangement (6) for the electrical or electronic component (7) is embodied in a surface (4) that is facing the cavity (3) or in a surface (5) of the carrier element (1) that is remote from the cavity (3),
**characterised in that** the carrier element (1) is overmoulded at least in regions using different synthetic materials (10, 12), wherein preferably a first synthetic material (10) is a thermally conductive synthetic material and a further synthetic material (12) is a thermally nonconductive synthetic material, and wherein the carrier element (1) is overmoulded in the region of the at least one electrical or electronic component (7) using a synthetic material (10), which is an electrically insulating and/or thermally conductive synthetic material.

2. Electrical sensor (2) according to claim 1,
**characterised in that** the carrier element (1) comprises, at least in one section, an outer contour that deviates from the circular shape and/or an inner contour that delimits the cavity and deviates from the circular shape.

3. Electrical sensor (2) according to claim 1 or 2,
**characterised in that** the at least one receiving arrangement (6) is designed as a recess in the carrier element (1), wherein the dimensions of the recess are preferably adapted to the dimensions of the electrical or electronic component (7) to be inserted therein.

4. Electrical sensor (2) according to one of the preceding claims,
**characterised in that** at least one guide channel (8) for guiding one or more connection wires (9) of the electrical or electronic component (7) or an electrical connection line is connected to the at least one receiving arrangement (6), wherein the guide channel (8) preferably runs in the longitudinal direction and/or is designed as a longitudinal groove in the carrier element (1).

5. Electrical sensor (2) according to one of the preceding claims,
**characterised in that** the carrier element (1) comprises a plurality of receiving arrangements (6), which are preferably arranged at a distance from one another, in particular at an angular distance, in the circumferential direction of the carrier element (1).

6. Electrical sensor (2) according to one of the preceding claims,
**characterised in that** the carrier element (1) is manufactured at least in sections from synthetic material, preferably from an electrically insulating and/or thermally conductive synthetic material, and/or is an injection moulded part.

7. Electrical sensor (2) according to one of the preceding claims,
**characterised in that** the electrical or electronic component (7) is a measuring resistor, for example a platinum measuring resistor, in particular a platinum measuring resistor in SMD design, or an NTC resistor.

8. Electrical sensor (2) according to one of the preceding claims,
**characterised in that** the electrical or electronic component (7) comprises connection wires (9), which are received in at least one guide channel (8) of the carrier element (1).

9. Electrical sensor (2) according to claim 1
**characterised in that** the surface (4) that is facing the cavity (3) and/or the surface (5) that is remote from the cavity (3) and/or at least one end face (11) of the carrier element (1) is or are overmoulded at least in regions using the synthetic material (10).

10. Electrical sensor (2) according to one of the preceding claims,
**characterised in that** the electrical sensor (2) comprises at least one further electrical or electronic component (13), which is preferably a pressure measuring element for forming a pressure sensor.

11. Electrical sensor (2) according to claim 10, **characterised in that** the at least one further electrical or electronic component (13) is integrated circumferentially or at the end face into the electrical sensor (2).

12. Media-conducting line having a section or a branch, which is embodied by an electrical sensor (2) according to one of claims 1 to 11 and/or in which an electrical sensor (2) according to one of claims 1 to 11 is received.

## Revendications

1. Capteur électrique (2), en particulier capteur de température, comportant un élément de support (1) et au moins un composant électrique ou électronique (7) qui est logé dans un logement (6) de l'élément de support (1) et qui est de préférence fixé en position dans au moins une direction dans l'espace par l'élément de support (1), dans lequel l'élément de support (1) est conçu, au moins par sections, sous forme tubulaire et limite une cavité (3) ouverte au moins d'un côté, et dans lequel le logement (6) pour le composant électrique ou électronique (7) est réalisé dans une surface (4) orientée vers la cavité (3) ou dans une surface (5) située du côté opposé à la cavité (3) de l'élément de support (1),
**caractérisé en ce que** l'élément de support (1) est surmoulé au moins dans certaines zones avec différentes matières plastiques (10, 12), une première matière plastique (10) étant de préférence une matière plastique thermoconductrice et une autre matière plastique (12) une matière plastique non thermoconductrice, et l'élément de support (1) étant surmoulé, dans la zone de l'au moins un composant électrique ou électronique (7), avec une matière plastique (10) qui est une matière plastique électriquement isolante et/ou thermoconductrice.

2. Capteur électrique (2) selon la revendication 1, **caractérisé en ce que** l'élément de support (1) présente, au moins sur une section, un contour externe différent de la forme circulaire et/ou un contour interne limitant la cavité différent de la forme circulaire.

3. Capteur électrique (2) selon la revendication 1 ou 2,
**caractérisé en ce que** l'au moins un logement (6) est conçu sous la forme d'un évidement dans l'élément de support (1), les dimensions de l'évidement étant de préférence adaptées aux dimensions du composant électrique ou électronique (7) à y placer.

4. Capteur électrique (2) selon l'une des revendications précédentes,
**caractérisé en ce qu'**au moins un canal de guidage (8) destiné au guidage d'un ou de plusieurs fils de connexion (9) du composant électrique ou électronique (7) ou d'une ligne de connexion électrique est adjacent à l'au moins un logement (6), le canal de guidage (8) s'étendant de préférence dans la direction longitudinale et/ou étant de préférence conçu sous la forme d'une rainure longitudinale dans l'élément de support (1).

5. Capteur électrique (2) selon l'une des revendications précédentes,
**caractérisé en ce que** l'élément de support (1) présente plusieurs logements (6) qui sont de préférence agencés dans la direction circonférentielle de l'élément de support (1) à une certaine distance, de préférence une distance angulaire, les uns des autres.

6. Capteur électrique (2) selon l'une des revendications précédentes,
**caractérisé en ce que** l'élément de support (1) est fabriqué, au moins par sections, en matière plastique, de préférence en une matière plastique électriquement isolante et/ou thermoconductrice, et/ou est une pièce moulée par injection.

7. Capteur électrique (2) selon l'une des revendications précédentes,
**caractérisé en ce que** le composant électrique ou électronique (7) est une résistance de mesure, par exemple une résistance de mesure en platine, en particulier une résistance de mesure en platine construite sous forme de CMS, ou une résistance CTN.

8. Capteur électrique (2) selon l'une des revendications précédentes,
**caractérisé en ce que** le composant électrique ou électronique (7) présente des fils de connexion (9) qui sont logés dans au moins un canal de guidage (8) de l'élément de support (1).

9. Capteur électrique (2) selon la revendication 1,
**caractérisé en ce que** la surface (4) orientée vers la cavité (3) et/ou la surface (5) située du côté opposé à la cavité (3) et/ou au moins une face frontale (11) de l'élément de support (1) est ou sont, au moins dans certaines zones, surmoulée(s) avec la matière plastique (10).

10. Capteur électrique (2) selon l'une des revendications précédentes,
**caractérisé en ce que** le capteur électrique (2) comprend au moins un autre composant électrique ou électronique (13) qui est de préférence un élément de mesure de pression destiné à former un capteur de pression.

11. Capteur électrique (2) selon la revendication 10, **caractérisé en ce que** l'au moins un autre composant électrique ou électronique (13) est intégré dans le capteur électrique (2) sur le côté circonférentiel ou le côté frontal.

12. Conduite servant au transport de fluide comportant une section ou une dérivation qui est réalisée par un capteur électrique (2) selon l'une des revendications 1 à 11 et/ou dans laquelle un capteur électrique (2) selon l'une des revendications 1 à 11 est logé.
